# EUROPÄISCHE PATENTSCHRIFT

(11) **EP 3 499 021 B1**
(45) Veröffentlichungstag und Bekanntmachung des Hinweises auf die Patenterteilung: **11.11.2020**
(21) Anmeldenummer: 17206681.3
(22) Anmeldetag: 12.12.2017
(51) Int. Cl.: F03D 5/02, F03D 13/20, B64C 31/06, B64C 39/02, B63H 9/06

(54) **KITESYSTEM UND VERFAHREN ZUM BETREIBEN EINES KITESYSTEMS**
KITE SYSTEM AND METHOD FOR OPERATING SAME
SYSTÈME DE CERF-VOLANT ET PROCÉDÉ DE FONCTIONNEMENT D'UN SYSTÈME DE CERF-VOLANT

(43) Veröffentlichungstag der Anmeldung: 19.06.2019
(73) Patentinhaber: SkySails Power GmbH, 20537 Hamburg (DE)
(72) Erfinder: Specht, Bernd, 22765 Hamburg (DE); Paulig, Xaver, 22769 Hamburg (DE); Braun, Felix, 24109 Melsdorf (DE); Heeckt, Christoph, 21220 Seevetal (DE)
(74) Vertreter: Glawe, Delfs, Moll

(56) Entgegenhaltungen:
- CN-A- 102 220 938
- DE-C1- 10 162 859
- US-A1- 2002 033 019

## Beschreibung

Die Erfindung betrifft ein Kitesystem mit einem Kite und einem Zugseil. Das Zugseil erstreckt sich zwischen dem Kite und einem Holepunkt. Die Erfindung betrifft außerdem ein Verfahren zum Betreiben eines Kitesystems.

Bei einem solchen Kitesystem kann der Kite frei ausfliegen, wobei der Abstand zum Holepunkt durch die Länge des Zugseils definiert ist. Das Zugseil erstreckt sich durch den Luftraum zwischen dem Holepunkt und dem Kite, woraus sich eine Gefährdung für den Luftverkehr geben kann.

Der Erfindung liegt die Aufgabe zugrunde, ein Kitesystem und ein Verfahren zum Betreiben eines Kitesystems vorzustellen, mit denen das Risiko einer Gefährdung des Luftverkehrs vermindert ist. Ausgehend vom genannten Stand der Technik wird die Aufgabe gelöst mit den Merkmalen der unabhängigen Ansprüche. Vorteilhafte Ausführungsformen sind in den Unteransprüchen angegeben.

Bei dem erfindungsgemäßen Kitesystem ist zwischen dem Holepunkt und dem Kite ein Markierungshalter angeordnet. Der Markierungshalter ist dazu ausgelegt, zwischen einem mit dem Zugseil mitlaufenden Zustand und einem gegenüber dem Zugseil freilaufenden Zustand zu wechseln. Das Kitesystem umfasst eine Bestückungseinrichtung, die dazu ausgelegt ist, einen Wechsel zwischen dem ersten Zustand und dem zweiten Zustand des Mitnehmers auszulösen, wobei zwischen dem Kite und dem Holepunkt eine Mehrzahl von Markierungshaltern angeordnet ist.

Durch die Erfindung wird es möglich, das Zugseil mit Markierungen zu bestücken, die für den Luftverkehr besser wahrnehmbar sind als das Zugseil an sich. Dem Luftverkehr wird die Möglichkeit geboten, dass Zugseil rechtzeitig zu entdecken und die weitere Flugroute so zu gestalten, dass eine Kollision mit dem Zugseil vermieden wird. Im mitlaufenden Zustand bewegt der Markierungshalter sich zusammen mit dem Zugseil, so dass der Markierungshalter durch Ausfieren des Zugseils in die gewünschte Höhe gebracht werden kann. Im freilaufenden Zustand des Markierungshalters kann das Zugseil sich unabhängig von dem Markierungshalter bewegen. Das Zugseil kann also beispielsweise eingeholt werden, ohne dass das Einholen durch den Markierungshalter behindert wird.

Der Markierungshalter kann eine Markierung aufweisen. Die Markierung kann eine Sichtmarkierung sein, beispielsweise in Form einer Leuchte, eines Balls oder einer Fahne. Möglich sind auch Markierungen, die auf andere Weise detektiert werden können, beispielsweise eine Funkmarkierung oder eine Radarmarkierung. In einer Ausführungsform der Erfindung ist die Markierung lösbar mit dem Markierungshalter verbunden. Dies kann insbesondere sinnvoll sein, wenn die Markierung großflächig ist, wie es bei einem Ball oder eine Fahne regelmäßig der Fall ist. Die Handhabung des Markierungshalters kann in diesen Fällen erleichtert werden, indem die Markierung von dem Markierungshalter gelöst wird. Möglich ist auch eine fest mit dem Markierungshalter verbundene Markierung, die im normalen Betrieb des Kitesystems nicht von dem Markierungshalter gelöst wird. Dies kann beispielsweise zweckmäßig sein, wenn die Markierung eine Leuchte ist.

Das Kitesystem kann einen Sperrmechanismus umfassen, der zwischen dem Zugseil und dem Markierungshalter wirkt. In einem Nicht-Eingriffszustand des Sperrmechanismus ist der Markierungshalter freilaufend relativ zu dem Zugseil. In einem Eingriffszustand des Sperrmechanismus ist der Markierungshalter mitlaufend relativ zu dem Zugseil. Freilaufend bedeutet, dass es keine mechanische Verbindung zwischen dem Markierungshalter und dem Zugseil gibt, die in Längsrichtung des Zugseils wirkt. Im freilaufenden Zustand kann das Zugseil also eingeholt oder ausgefiert werden, ohne dass der Markierungshalter sich bewegt. Im Unterschied dazu gibt es im Eingriffszustand des Sperrmechanismus eine in Längsrichtung des Zugseils wirkende mechanische Verbindung zwischen dem Markierungshalter und dem Zugseil. Beim Ausfieren oder Einholen bewegt der Markierungshalter sich also zusammen mit dem Zugseil. Der Sperrmechanismus kann ein Element des Markierungshalters sein. Möglich ist auch ein von dem Markierungshalter separater Sperrmechanismus.

Es kann ausreichen, dass der Sperrmechanismus nur in einer Richtung wirksam ist, beispielsweise so, dass ein Abrutschen des Markierungshalters nach unten verhindert wird. Einer Bewegung nach oben steht normalerweise die Schwerkraft entgegen, so dass der Sperrmechanismus dieser Richtung nicht unbedingt wirksam sein muss. Zu der Erfindung gehören auch Ausführungsformen, bei denen der Sperrmechanismus in beiden Richtungen wirkt.

Der Sperrmechanismus kann durch eine Federkraft in einem Eingriff szustand mit dem Zugseil gehalten werden. Ein Eingriffselement des Sperrmechanismus kann im Eingriffszustand unter einer Federspannung stehen, wobei die Federspannung vorzugsweise einerseits so groß ist, dass der Markierungshalter zuverlässig mit dem Zugseil verbunden ist, und andererseits nicht so groß ist, dass die Außenfläche des Zugseils beschädigt wird. Der Sperrmechanismus kann beispielsweise als Curryklemme ausgestaltet sein, bei der das Zugseil im Eingriffszustand zwischen zwei oder mehr Eingriffselementen eingeschlossen ist. Im Nicht-Eingriffszustand kann der Sperrmechanismus unter Überwindung der Federkraft auf Abstand von dem Zugseil gehalten werden.

In einer Ausführungsform der Erfindung wird der Sperrmechanismus eines ersten Markierungshalters durch Eingriff mit einem zweiten Markierungshalters in einem Nicht-Eingriffszustand gehalten. Der Sperrmechanismus des ersten Markierungshalters kann so gestaltet sein, dass er nach Auflösen des Eingriffs mit dem zweiten Markierungshalter automatisch den Eingriffszustand übergeht.

Der zweite Markierungshalter kann einen Dorn umfassen, der in einer Ausnehmung des ersten Markierungshalters eingreift. Der Dorn kann konzentrisch zu dem Zugseil angeordnet sein. Durch den Dorn kann ein Eingriffselement des Sperrmechanismus des ersten Markierungshalters auf Abstand von der Oberfläche des Zugseils gehalten werden, so dass der erste Markierungshalter im freilaufenden Zustand ist. Wird der erste Markierungshalter von dem Dorn abgestreift, so kann der Sperrmechanismus in Eingriff mit dem Zugseil kommen, so dass der Markierungshalter in den mitlaufenden Zustand übergeht.

Das Kitesystem kann so ausgelegt sein, dass der Kite die in großen Höhen vorherrschenden stärkeren Winde nutzen kann. Beispielsweise kann der Abstand zwischen dem Kite und dem Holepunkt größer sein als 100 m, vorzugsweise größer sein als 200 m, weiter vorzugsweise größer sein als 500 m, wenn das Zugseil auf volle Länge ausgefiert ist. Der Markierungshalter kann im mitlaufenden Zustand einen Abstand vom oberen Ende des Zugseils haben, der größer ist als 20 m, vorzugsweise größer ist als 50 m, weiter vorzugsweise größer ist als 80 m. Zwischen dem oberen Ende des Zugseils und dem Kite kann eine Steuergondel angeordnet sein. Der Kite kann über eine Mehrzahl von Steuerleinen mit der Steuergondel verbunden sein. Die Steuergondel kann dazu ausgelegt sein, die Länge einzelner oder mehrerer Steuerleinen zu verändern, um den Kite entlang vorgegebener Flugbahnen zu steuern. Der Abstand zwischen dem Holepunkt und dem Markierungshalter kann größer sein als 20 m, vorzugsweise größer sein als 50 m weiter vorzugsweise größer sein als 80 m, wenn das Zugseil im voll ausgefierten Zustand ist.

Das Kitesystem kann so ausgelegt sein, dass das Zugseil nach dem Starten des Kites zunächst für eine Strecke ausgefiert wird, wenn der Markierungshalter im freilaufenden Zustand ist. Die im freilaufenden Zustand ausgefierte Strecke kann beispielsweise größer sein als 20 m, vorzugsweise größer sein als 50 m, weiter vorzugsweise größer sein als 80 m.

An den frei ausgefierten Abschnitt des Zugseils schließt ein weiterer Abschnitt an, der dazu bestimmt ist, einen Markierungshalter zu tragen. Das erfindungsgemäße Kitesystem ist vorzugsweise so ausgelegt, dass nach dem Ende des frei ausgefierten Abschnitts ein Wechsel zwischen dem freilaufenden Zustand und dem mitlaufenden Zustand des Markierungshalters ausgelöst wird. Mit dem weiteren Ausfieren des Zugseils kann der Markierungshalter dann in die gewünschte Höhe getragen werden.

Das erfindungsgemäße Kitesystem umfasst eine Mehrzahl von Markierungshaltern, die zwischen dem Kite und dem Holepunkt angeordnet sind. Die mit dem Zugseil mitlaufenden zueinander benachbarten Markierungshalter können einen Abstand zueinander haben, der größer ist als 20 m, vorzugsweise größer ist als 50 m, weiter vorzugsweise größer ist als 80 m. Auf einen langen frei ausgefierten Abschnitt folgt also jeweils ein kurzer Abschnitt, der einen Markierungshalter trägt.

Das Kitesystem kann eine Überwachungseinrichtung umfassen, die die Länge des aktuellen frei ausgefierten Abschnitts überwacht. Der aktuelle frei ausgefierte Abschnitt erstreckt sich entweder zwischen dem oberen Ende des Zugseils und dem Holepunkt oder zwischen dem untersten mitlaufenden Markierungshalter und dem Holepunkt. Aus der Länge des aktuellen frei ausgefierten Abschnitts kann abgeleitet werden, zu welchem Zeitpunkt ein Wechsel eines Markierungshalters zwischen dem freilaufenden Zustand und dem mitlaufenden Zustand erforderlich ist. Insbesondere kann beim Einholen des Zugseils ein Zeitpunkt ermittelt werden, zudem der unterste Markierungshalter von dem mitlaufenden Zustand in den freilaufenden Zustand wechselt. Beim Ausfieren des Zugseils kann ein Zeitpunkt ermittelt werden, zu dem ein Markierungshalter von dem freilaufenden Zustand in den mitlaufenden Zustand wechselt.

Die Bestückungseinrichtung kann dazu ausgelegt sein, nach einem von der Überwachungseinrichtung empfangenen Steuerbefehl einen Wechsel zwischen einem mitlaufenden Zustand und einem freilaufenden Zustand eines Markierungshalters auszulösen. Möglich ist auch, dass das Zugseil mit einer Kennzeichnung ausgestattet ist, aus dem die Bestückungseinrichtung einen Zeitpunkt ableiten kann, zu dem ein Wechsel zwischen einem freilaufenden Zustand und einem mitlaufenden Zustand eines Markierungshalters ausgelöst wird.

Die Bestückungseinrichtung kann dazu ausgelegt sein, den Wechsel des Markierungshalters vom freilaufenden Zustand in den mitlaufenden Zustand auszulösen und/oder den Wechsel des Markierungshalters vom mitlaufenden Zustand in den freilaufenden Zustand auszulösen. Ein Wechsel zwischen beiden Zuständen kann ausgelöst werden, indem ein Betätigungsteil der Bestückungseinrichtung auf den Markierungshalter einwirkt.

Die Bestückungseinrichtung kann so ausgelegt sein, dass insbesondere der Wechsel vom freilaufenden Zustand in den mitlaufenden Zustand mittels einer aktiven Betätigung durch die Bestückungseinrichtung ausgelöst wird. Beim Übergang vom mitlaufenden Zustand in den freilaufenden Zustand kann die kinetische Energie des Markierungshalters genutzt werden, um den Übergang zwischen den Zuständen zu bewirken. Zu einem Übergang vom mitlaufenden Zustand in den freilaufenden Zustand kommt es regelmäßig dann, wenn das Zugseil eingeholt wird. Der Markierungshalter nähert sich dann mit der Geschwindigkeit, mit der das Zugseil eingeholt wird, an den Holepunkt an. Mit dem Übergang in den freilaufenden Zustand wird die Geschwindigkeit üblicherweise auf null reduziert. Die mit dem Abbremsen freiwerdende kinetische Energie kann genutzt werden, um den Übergang vom mitlaufenden Zustand in den freilaufenden Zustand zu bewirken. Beispielsweise kann der Markierungshalter auf einen Dorn auflaufen, der einen Sperrmechanismus zwischen dem Markierungshalter und dem Zugseil aufhebt. Zusätzlich oder alternativ dazu kann eine aktive Betätigung durch die Bestückungseinrichtung vorgesehen sein, um den Übergang vom mitlaufenden Zustand in den freilaufenden Zustand zu bewirken.

Die Bestückungseinrichtung kann dazu ausgelegt sein, den Markierungshalter zu verschieben, um einen Wechsel zwischen den beiden Zuständen auszulösen. Das Verschieben kann in Längsrichtung des Zugseils erfolgen. Indem die Bestückungseinrichtung den Markierungshalter verschiebt, der Sperrmechanismus gelöst werden. Nach Lösen des Sperrmechanismus kann der Markierungshalter automatisch in den anderen Zustand übergehen. Insbesondere kann es sich um einen Übergang vom freilaufenden Zustand zum mitlaufenden Zustand handeln. Die Bestückungseinrichtung kann einen Schnapphebel umfassen, um den Markierungshalter zu verschieben.

Das erfindungsgemäße Kitesystem kann ein Magazin umfassen, das dazu ausgelegt ist, eine Mehrzahl von Markierungshaltern aufzunehmen, die im freilaufenden Zustand sind. Das Magazin kann so gestaltet sein, dass die in dem Magazin angeordneten Markierungshalter das Zugseil umgeben. Beispielsweise können die Markierungshalter eine Bohrung umfassen, durch die das Zugseil hindurchgeführt ist.

Die Erfindung umfasst Ausführungsformen, bei der ein Markierungshalter nur dadurch vom Zugseil gelöst werden kann, dass das Zugseil in Längsrichtung aus dem Markierungshalter herausgezogen wird. In anderen Ausführungsformen umfasst der Markierungshalter eine radiale Öffnung, so dass der Markierungshalter durch eine Bewegung in radialer Richtung von dem Zugseil gelöst werden kann.

Wenn die Markierungshalter im Betrieb von dem Zugseil gelöst werden können, so kann das Magazin so eingerichtet sein, dass die Markierungshalter an einem von dem Zugseil separaten Ort gelagert werden.

Der Holepunkt kann eine Holepunktscheibe umfassen, über die das Zugseil umgelenkt wird. Die Holepunktscheibe kann so angeordnet sein, dass ein erster Abschnitt des Zugseils sich auf geradem Weg von der Holepunktscheibe in Richtung des Kites erstreckt. Ein zweiter Abschnitt des Zugseils kann sich in einer davon abweichenden Richtung zu einem anderen Element des Kitesystems erstrecken. Die Holepunktscheibe kann um eine Holepunktachse schwenkbar gelagert sein. Die Holepunktachse kann einen rechten Winkel einschließen mit einer Zentralachse der Holepunktscheibe. Der Abstand zwischen der Zentralachse der Holepunktscheibe und der Holepunktachse kann dem Radius der Holepunktscheibe entsprechen. Die Holepunktachse kann mit der Richtung zusammenfallen, in der sich der zweite Abschnitt des Zugseils erstreckt.

Wenn das erfindungsgemäße Kitesystem einen Übergabearm umfasst, um den Markierungshalter von dem Zugseil zu dem Magazin zu bewegen, so kann der Übergabearm schwenkbar gelagert sein, wobei die Schwenkachse parallel zu der Zentralachse der Holepunktscheibe ausgerichtet ist, insbesondere koaxial zu der Zentralachse der Holepunktscheibe ausgerichtet ist.

Der Holepunkt kann einen Zugseilaustritt umfassen. Der Zugseilaustritt kann den Austrittspunkt bilden, zu dem sich das Zugseil von dem Kite kommend erstreckt. Zwischen dem Austrittspunkt und dem Kite unterliegt das Zugseil vorzugsweise keiner weiteren Führung. Der Zugseilaustritt kann zusammen mit der Holepunktscheibe schwenkbar um die Holepunktachse gelagert sein. Das erfindungsgemäße Kitesystem ist vorzugsweise so ausgelegt, dass ein Wechsel zwischen dem mitlaufenden Zustand und dem freilaufenden Zustand des Markierungshalters benachbart zu dem Zugseilaustritt durchgeführt wird.

Wird ein im freilaufenden Zustand befindlicher Markierungshalter benachbart zu dem Zugseilaustritt gelagert, so wird der Holepunkt schwerfälliger bezogen auf Schwenkbewegungen um die Holepunktachse. Es kann deswegen von Vorteil sein, die Markierungshalter in einem Magazin zu lagern, dessen radialer Abstand zu der Holepunktachse kleiner ist als der radiale Abstand zwischen der Holepunktachse und dem Zugseilaustritt.

Der Holepunkt kann Bestandteil einer fest am Boden angeordneten Station sein. Möglich auch, dass der Holepunkt auf einer schwimmenden Plattform angeordnet ist. Die schwimmende Plattform kann ein Schiff sein, wobei das Kitesystem dazu genutzt wird, den Vortrieb des Schiffs zu unterstützen. Möglich ist auch, dass das Zugseil über den Holepunkt an einen Generator angeschlossen ist, um elektrische Energie zu erzeugen. Alternativ kann das Zugseil auch an eine Einrichtung angeschlossen sein, mit der die von dem Kitesystem zur Verfügung gestellte Energie in eine andere Energieform umgewandelt wird.

Für die Energieerzeugung kann es von Vorteil sein, wenn das Kitesystem in einem Wechselbetrieb betrieben wird, wobei sich in dem Wechselbetrieb Phasen, in denen das Zugseil ausgefiert wird, abwechselnd mit Phasen, in denen das Zugseil eingeholt wird. Beim Einholen kann der Kite in eine Flugposition gebracht werden, in der er nur eine geringe Zugkraft ausübt. Beim Ausfieren kann der Kite so gesteuert werden, dass er eine hohe Zugkraft ausübt. Die beim Ausfieren ausgeübte hohe Zugkraft kann in eine andere Energieform umgewandelt werden. Der Zugseilabschnitt, der bei diesem Wechselbetrieb ausgefiert bzw. eingeholt wird kann größer sein als 50 m, vorzugsweise größer sein als 100 m.

Das Ausfieren bzw. Einholen kann sich über einen Zugseilabschnitt erstrecken, in dem ein Markierungshalter mit dem Zugseil verbunden ist. Das erfindungsgemäße Kitesystem kann so ausgelegt sein, dass im Wechselbetrieb bei jedem Ausfieren ein Markierungshalter in den verbundenen Zustand gebracht wird und bei jedem Einholen derselbe Markierungshalter in den freilaufenden Zustand gebracht wird.

Das erfindungsgemäße Kitesystem kann so eingerichtet sein, dass die Zugseil-Geschwindigkeit, mit der das Zugseil ausgefiert bzw. eingeholt wird, vermindert wird, um den Wechsel zwischen den beiden Zuständen des Markierungshalters zu erleichtern. Beispielsweise kann die Zugseil-Geschwindigkeit zu dem Zeitpunkt, zu dem der Zustand des Markierungshalters wechselt, um mindestens 10 %, vorzugsweise um mindestens 20 % geringer sein als die Grundgeschwindigkeit des Zugseils.

Der Markierungshalter kann eine Markierung aufweisen, die elektrischen Strom verbraucht, wie es beispielsweise bei einer Leuchte üblicherweise der Fall ist. Um den Betrieb einer solchen Markierung ohne externe Versorgung zu ermöglichen, kann der Markierungshalter einen Stromspeicher umfassen, beispielsweise in Form einer Batterie. Der Markierungshalter kann externe Kontakte aufweisen, um ein Aufladen des Stromspeichers zu ermöglichen. Um ein Kontaktieren von außen zu erleichtern, können die externen Kontakte sich ringförmig um den Markierungshalter herum erstrecken. Wenn der Markierungshalter im freilaufenden Zustand ist, können die externen Kontakte von außen kontaktiert sein, um Strom zu dem Stromspeicher zuzuführen. Beispielsweise kann das Magazin der Markierungshalter mit geeigneten elektrischen Leitern ausgestattet sein.

Die Inbetriebnahme der Markierung kann gekoppelt sein mit dem Wechsel zwischen freilaufenden Zustand und mitlaufenden Zustand des Markierungshalters. Beispielsweise kann die Markierung beim Übergang von dem freilaufenden Zustand in den mitlaufenden Zustand automatisch aktiviert werden. Beim Übergang vom mitlaufenden Zustand in den freilaufenden Zustand kann die Markierung automatisch deaktiviert werden.

Im Betrieb des erfindungsgemäßen Kitesystems kann es erforderlich sein, Steuerinformationen zwischen einer Station am Boden und der Steuergondel zu übermitteln. Zu diesem Zweck kann eine Funkverbindung zwischen einer Steuergondel und einer Station am Boden aufgebaut werden. Für die Zuverlässigkeit der Funkverbindung kann es von Vorteil sein, wenn zwischen der Station am Boden und der Steuergondel Funk-Repeater angeordnet sind. In einer Ausführungsform der Erfindung sind einer oder mehrere Markierungshalter mit einem Funk-Repeater ausgestattet.

Die Erfindung betrifft außerdem eine Verfahren zum Betreiben eines Kitesystems, bei dem ein Zugseil zwischen einem Kite und einem Holepunkt angeordnet ist und bei dem ein Markierungshalter von einem gegenüber dem Zugseil freilaufenden Zustand in einen mit dem Zugseil mitlaufenden Zustand gebracht wird, nachdem das Zugseil über eine vorgegebene Strecke im freilaufenden Zustand des Markierungshalters ausgefiert wurde.

Das Verfahren kann mit weiteren Merkmalen fortgebildet werden, die im Zusammenhang des erfindungsgemäßen Kitesystems beschrieben sind. Das Kitesystem kann mit weiteren Merkmalen fortgebildet werden, die im Zusammenhang des erfindungsgemäßen Verfahrens beschrieben sind.

Die Erfindung wird nachfolgend unter Bezugnahme auf die beigefügten Zeichnungen anhand vorteilhafter Ausführungsformen beispielhaft beschrieben. Es zeigen:
- Fig. 1:: eine schematische Darstellung eines erfindungsgemäßen Kitesystems;
- Fig. 2:: einen Holepunkt eines erfindungsgemäßen Kitesystems in einer Seitenansicht;
- Fig. 3:: den Holepunkt gemäß Fig. 2 in einer perspektivischen Darstellung;
- Fig. 4:: einen Markierungshalter eines erfindungsgemäßen Kitesystems in einer Schnittdarstellung;
- Fig. 5:: eine Mehrzahl von Markierungshaltern in geschnittener Darstellung;
- Fig. 6 und 7:: Details eines erfindungsgemäßen Kitesystems in vergrößerter Darstellung;
- Fig. 8 bis 11:: eine schematische Darstellung eines erfindungsgemäßen Verfahrensablaufs.

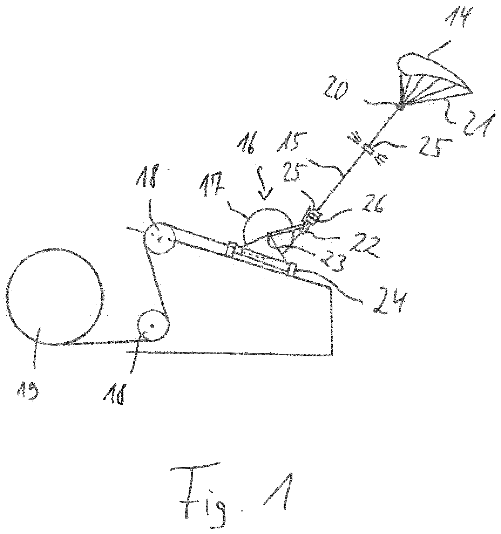

Bei einem in Fig. 1 gezeigten Kitesystem ist ein Kite 14 über ein Zugseil 15 mit einem Holepunkt 16 verbunden. Das Zugseil 15 wird über eine Holepunktscheibe 17 des Holepunkts 16 sowie über zwei Umlenkrollen 18 zu einer Zugseilwinde 19 geführt. Das obere Ende des Zugseils 15 ist an eine Steuergondel 20 angeschlossen. Zwischen der Steuergondel 20 und dem Kite 14 erstreckt sich eine Mehrzahl von Steuerleinen 21. Die Steuergondel 20 ist dazu ausgelegt, die Länge einzelner oder mehrerer Steuerleinen 21 zu verändern. Dadurch werden die aerodynamischen Eigenschaften des Kites 14 verändert, und der Kite 14 kann entlang vorgegebener Flugbahnen gesteuert werden.

Bei seinen Flugbewegungen übt der Kite 14 eine Zugkraft auf das Zugseil 15 aus, die sich auf die Zugseilwinde 19 überträgt. Die Zugkraft kann genutzt werden, um die Zugseilwinde 19 in Rotation zu versetzen und über die Zugseilwinde 19 einen Generator zur Erzeugung elektrischer Energie anzutreiben. Dabei wird das Zugseil 15 ausgefiert, der Abstand zwischen dem Kite 14 und dem Holepunkt 16 vergrößert sich also.

Wenn das Zugseil 15 auf seine volle Länge ausgefiert ist, muss das Zugseil 15 zunächst über eine bestimmte Länge eingeholt werden, bevor eine erneute Energieerzeugung möglich ist. In dieser Phase wird der Kite 14 in eine Position gebracht, in der er eine geringe Zugkraft ausübt. Dies kann beispielsweise eine Position annähernd senkrecht über dem Holepunkt 16 sein.

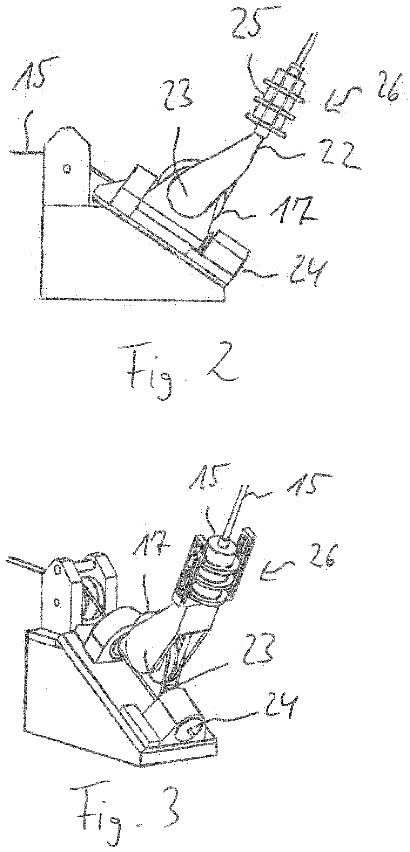

Der Holepunkt 16 umfasst einen Zugseilaustritt 22, der das Zugseil von der Holepunktscheibe 17 kommend in Richtung der Steuergondel 20 lenkt. Um der Flugbahn des Kites 14 folgen zu können ist der Zugseilaustritt 22 schwenkbar gelagert. Wie in den Fig. 2, 3 am besten zu sehen, ist ein erstes Schwenklager 23 koaxial zu der Zentralachse der Holepunktscheibe 17 angeordnet. Ein zweites Schwenklager hat seine Schwenkachse in der Holepunktachse 24. Mit dem zweiten Schwenklager werden die Holepunktscheibe 17 und der Zugseilaustritt 22 gemeinsam geschwenkt.

An dem Zugseil 15 ist ungefähr auf halbem Weg zwischen der Steuergondel 20 und dem Zugseilaustritt 22 ein Markierungshalter 25 angebracht, der eine Leuchte umfasst. Die Lichtsignale von der Leuchte können weithin wahrgenommen werden. Der Luftverkehr wird frühzeitig auf das Zugseil 15 aufmerksam und kann die Flugroute so wählen, dass eine Kollision mit dem Zugseil 15 vermieden wird. Der Markierungshalter 25 ist mitlaufend relativ zu dem Zugseil 15. Der Markierungshalter 25 bewegt sich also nach oben, wenn das Zugseil 15 ausgefiert wird, und bewegt sich nach unten, wenn das Zugseil 15 eingeholt wird.

Drei weitere Markierungshalter 25 sind in einem benachbart zu dem Zugseilaustritt 22 angeordneten Magazin 26 aufgenommen. Die Markierungshalter 25 in dem Magazin 26 sind in einem freilaufenden Zustand relativ zu dem Zugseil 15. Sie behalten also ihre Position in dem Magazin 26 bei, wenn das Zugseil 15 ausgefiert oder eingeholt wird.

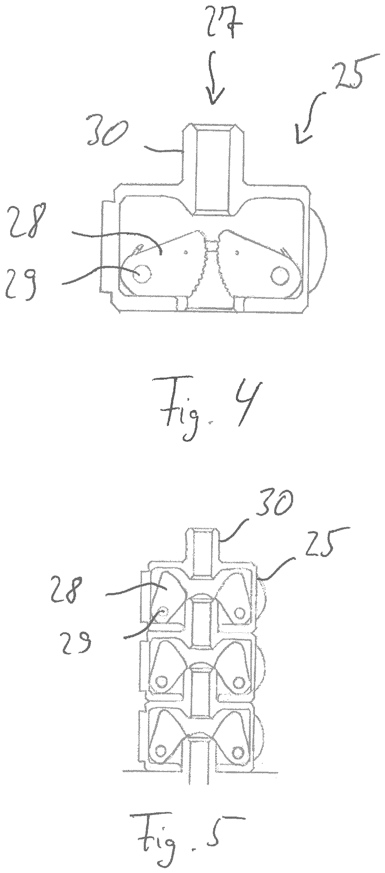

Die Markierungshalter 15 haben gemäß Fig. 4 eine zentrale Bohrung 27, die sich durch den Markierungsseite 15 hindurch erstreckt. Im Betrieb des erfindungsgemäßen Kitesystems ist das Zugseil 15 durch die Bohrung 27 hindurchgeführt. Der Markierungshalter umfasst einen Sperrmechanismus in Form einer Curryklemme. Die Curryklemme umfasst zwei Klemmbacken 28, die um Achsen 29 schwenkbar gelagert sind und die federbelastet in dem in Fig. 4 gezeigten Eingriffszustand gehalten werden. Wenn das Zugseil 15 durch die Bohrung 27 hindurchgeführt ist, liegen die Klemmbacken 28 an der Außenseite des Zugseils 25 an und sperren damit den Markierungshalter 25 relativ zu dem Zugseil 15. Der Markierungshalter 25 ist im mitlaufenden Zustand.

Um den Markierungshalter 25 in den freilaufenden Zustand zu bringen, werden die Klemmbacken 28 in Fig. 4 entgegen der Federlast nach oben geschwenkt, so dass die Klemmbacken 28 das Zugseil 15 nicht mehr berühren. In Fig. 5 sind drei Markierungshalter 25 jeweils im freilaufenden Zustand gezeigt. Die Klemmbacken 28 werden jeweils durch einen Dorn 30 eines darunter angeordneten Markierungshalters 25 in der nach oben geschwenkten Position gehalten. In dem freilaufenden Zustand gemäß Fig. 5 kann das Zugseil 15 durch die Markierungshalter 25 hindurch ausgefiert bzw. eingeholt werden, ohne dass die Markierungshalter 25 ihre Position ändern.

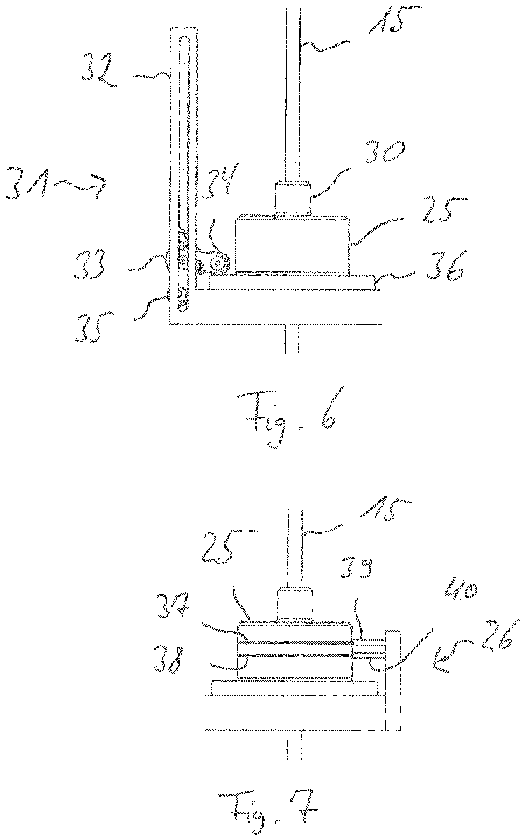

Damit der Markierungshalter 25 zwischen dem freilaufenden Zustand und dem mitlaufenden Zustand wechseln kann, umfasst das erfindungsgemäße Kitesystem gemäß Fig. 6 eine Bestückungseinrichtung 31. In der Bestückungseinrichtung 31 erstreckt sich eine Führungsschiene 32 parallel zu dem Zugseil 15. In der Führungsschiene 32 ist ein Schnapphebel 33 geführt, der einen ersten Schenkel 34 und einen zweiten Schenkel 35 umfasst. In Fig. 6 ist der Schnapphebel 33 nach unten geschwenkt, so dass der erste Schenkel 34 des Hebels 33 auf einem Flansch 36 des Markierungshalters 25 aufliegt. Der Markierungshalter 25 wird durch den Schnapphebel 33 im freilaufenden Zustand gehalten.

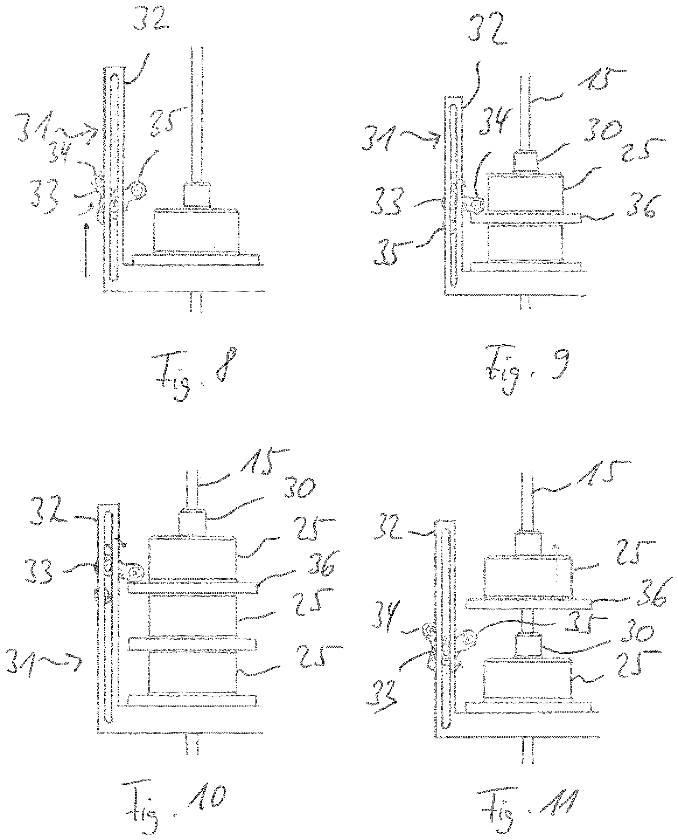

Wird das Zugseil ausgehend von dem in Fig. 6 gezeigten Zustand eingeholt, so wird ein zweiter Markierungshalter 25 an die Bestückungseinrichtung 31 herangeführt. Um den zweiten Markierungshalter 25 aufnehmen zu können, wird der Schnapphebel 33 in der Führungsschiene 31 ein Stück nach oben gefahren und der Schnapphebel 33 so nach oben geschwenkt, dass der zweite Schenkel 35 in den Weg des zweiten Markierungshalters 25 hineinragt. Trifft der Flansch 36 des zweiten Markierungshalters 25 auf den zweiten Schenkel 35 des Schnapphebels 33, so schlägt der Schnapphebel 33 um und geht in die Stellung gemäß Fig. 9 über.

Das Umschlagen des Schnapphebels 33 erfolgt unter dem Einfluss einer Federkraft. Der Schnapphebel 33 ist also in Fig. 8 in einem gespannten Zustand. Die mit dem ersten Schenkel 34 auf den Flansch 36 ausgeübte Kraft ist so bemessen, dass der zweite Markierungshalter 25 zuverlässig auf den Dorn 30 des ersten Markierungshalters 25 aufgeschoben wird. Der Dorn 30 des ersten Markierungshalters 25 drückt die Klemmbacken 28 des zweiten Markierungshalters 25 auseinander, so dass die Klemmbacken 28 das Zugseil 15 nicht mehr berühren. Der zweite Markierungshalter 25 ist dann im freilaufenden Zustand. In Fig. 10 ist der entsprechende Zustand nach der Aufnahme eines dritten Markierungshalters 25 gezeigt.

Für den umgekehrten Wechsel vom freilaufenden Zustand in den mitlaufenden Zustand wird der Schnapphebel 33 ausgehend von der in Fig. 9 gezeigten Position in der Führungsschiene 32 nach unten gefahren. Dabei schlägt der Schnapphebel 33 um, so dass der zweite Schenkel 35 eine Kraft von unten auf den Flansch 36 des zweiten Markierungshalters 25 ausübt. Der zweite Markierungshalter 25 wird von dem Dorn 30 des ersten Markierungshalters 25 abgehoben. Die Sperre der Klemmbacken 28 wird aufgehoben, so dass der zweite Markierungshalter 25 in den mitlaufenden Zustand übergeht. Beim weiteren Ausfieren des Zugseils 15 wird der zweite Markierungshalter 25 mit dem Zugseil 15 nach oben geführt.

Zugleich mit dem in Fig. 11 gezeigten Übergang vom freilaufenden Zustand in den mitlaufenden Zustand wird ein Schalter betätigt, der eine in den Markierungshalter 25 integrierte Leuchte in Betrieb setzt. Umgekehrt wird beim Übergang vom mitlaufenden Zustand in den freilaufenden Zustand der Schalter betätigt, um die Leuchte außer Betrieb zu setzen.

Bei der Ausführungsform gemäß Fig. 7 ist der Markierungshalter 25 mit zwei externen Kontakten 37, 38 versehen, die sich ringförmig um den Umfang des Markierungshalters 25 herum erstrecken. In dem Magazin 26 sind zwei Leiter 39, 40 angeordnet, die mit den externen Kontakten 37, 38 kontaktiert sind. Über die Leiter 39, 40 und die externen Kontakte 37, 38 wird eine in den Markierungshalter 25 integrierte Batterie aufgeladen.

Mit der Batterie werden die Leuchte sowie gegebenenfalls weitere in den Markierungshalter 25 integrierte elektrische Komponenten betrieben. Ein Beispiel für eine weitere elektronische Komponente ist ein Funk-Repeater, der dazu ausgelegt ist, Funksignale zwischen der Bodenstation des Kitesystems und der Steuergondel 20 weiterzuleiten.

## Patentansprüche

1. Kitesystem mit einem Kite (14), mit einem Holepunkt (16) und mit einem Zugseil (15), wobei das Zugseil (15) sich zwischen dem Kite (14) und dem Holepunkt (16) erstreckt und mit einem Markierungshalter (25), der zwischen dem Holepunkt (16) und dem Kite (14) angeordnet ist, wobei der Markierungshalter (25) dazu ausgelegt ist, zwischen einem mit dem Zugseil (15) mitlaufenden Zustand und einem gegenüber dem Zugseil (15) freilaufenden Zustand zu wechseln, und mit einer Bestückungseinrichtung (31), um einen Wechsel zwischen dem mitlaufenden Zustand und dem freilaufenden Zustand des Markierungshalters (25) auszulösen, wobei zwischen dem Kite (14) und dem Holepunkt (16) eine Mehrzahl von Markierungshaltern (25) angeordnet ist.

2. Kitesystem nach Anspruch 1, **dadurch gekennzeichnet, dass** der Markierungshalter (25) eine Sichtmarkierung aufweist.

3. Kitesystem nach Anspruch 1 oder 2, **dadurch gekennzeichnet, dass** das Kitesystem einen zwischen dem Zugseil (15) und dem Markierungshalter (25) wirkenden Sperrmechanismus (28, 29) umfasst.

4. Kitesystem nach einem der Ansprüche 1 bis 3, **dadurch gekennzeichnet, dass** der Sperrmechanismus (28, 29) durch eine Federkraft in einem Eingriffszustand mit dem Zugseil (15) gehalten wird.

5. Kitesystem nach Anspruch 3 oder 4, **dadurch gekennzeichnet, dass** der Sperrmechanismus (28, 29) eines ersten Markierungshalters (25) durch Eingriff mit einem zweiten Markierungshalters (25) in einem Nicht-Eingriffszustand mit dem Zugseil (15) gehalten wird.

6. Kitesystem nach Anspruch 5, **dadurch gekennzeichnet, dass** der Sperrmechanismus (28, 29) des ersten Markierungshalters im Nicht-Eingriffszustand mit einem Dorn (30) des zweiten Markierungshalters (25) zusammenwirkt, wobei der Dorn (30) insbesondere konzentrisch zu dem Zugseil (15) angeordnet sein kann.

7. Kitesystem nach einem der Ansprüche 1 bis 6, **dadurch gekennzeichnet, dass** der Abstand zweier benachbarter Markierungshalter (25) im mitlaufenden Zustand vorzugsweise größer ist als 20 m, weiter vorzugsweise größer ist als 50 m, weiter vorzugsweise größer ist als 80 m.

8. Kitesystem nach einem der Ansprüche 1 bis 7, **gekennzeichnet durch** eine Überwachungseinrichtung zum Überwachen der Länge des aktuell frei ausgefierten Abschnitts des Zugseils (15).

9. Kitesystem nach Anspruch 8, **dadurch gekennzeichnet, dass** die Bestückungseinrichtung (31) nach einem von der Überwachungseinrichtung empfangenen Steuerbefehl einen Wechsel zwischen einem mitlaufenden Zustand und einem freilaufenden Zustand eines Markierungshalters (25) auslöst.

10. Kitesystem nach einem der Ansprüche 1 bis 9, **dadurch gekennzeichnet, dass** die Bestückungseinrichtung (31) dazu ausgelegt ist, den Markierungshalter (25) zu verschieben, um einen Wechsel zwischen einem freilaufenden Zustand und einem mitlaufenden Zustand auszulösen.

11. Kitesystem nach einem der Ansprüche 1 bis 10, **gekennzeichnet durch** ein Magazin (26), das dazu ausgelegt ist, eine Mehrzahl von Markierungshaltern (25) aufzunehmen, die im freilaufenden Zustand sind.

12. Kitesystem nach Anspruch 11, **dadurch gekennzeichnet, dass** die Markierungshalter (25) im Betrieb vom Zugseil (15) gelöst werden können, wobei das Magazin (26) so eingerichtet ist, dass die Markierungshalter (25) an einem von dem Zugseil (15) separaten Ort gelagert werden können.

13. Kitesystem nach einem der Ansprüche 1 bis 12, **dadurch gekennzeichnet, dass** das Kitesystem so eingerichtet ist, dass die Zugseilgeschwindigkeit beim Wechsel eines Markierungshalters (25) zwischen einem mitlaufenden Zustand und einem freilaufenden Zustand geringer ist als eine Grundgeschwindigkeit des Zugseils (15).

14. Kitesystem nach einem der Ansprüche 1 bis 12, **dadurch gekennzeichnet, dass** der Markierungshalter (25) einen externen elektrischen Kontakt (37, 38) aufweist, über den eine Batterie des Markierungshalters (25) aufgeladen werden kann.

15. Verfahren zum Betreiben eines Kitesystems, bei dem sich ein Zugseil (15) zwischen einem Kite (14) und einem Holepunkt (16) erstreckt und bei dem ein Markierungshalter (25) von einem gegenüber dem Zugseil (15) freilaufenden Zustand in einen mit dem Zugseil (15) mitlaufenden Zustand gebracht wird, nachdem das Zugseil (15) über eine vorgegebene Strecke im freilaufenden Zustand des Markierungshalters (15) ausgefiert wurde, wobei das Kitesystem eine Mehrzahl von Markierungshaltern (25) umfasst und wobei die vorgegebene Strecke sich zwischen dem oberen Ende des Zugseils (15) und dem Holepunkt (16) oder zwischen einem untersten mitlaufenden Markierungshalter (25) und dem Holepunkt (16) erstreckt.

## Claims

1. Kite system having a kite (14), having a tow point (16), and having a hauling rope (15), wherein the hauling rope (15) extends between the kite (14) and the tow point (16), and having a marking holder (25) which is disposed between the tow point (16) and the kite (14), wherein the marking holder (25) is conceived for changing between a state entrained with the hauling rope (15) and a state which is free-running in relation to the hauling rope (15), and having a fitting installation (31) so as to initiate a changeover between the entrained state and the free-running state of the marking holder (25), wherein a plurality of marking holders (25) are disposed between the kite (14) and the tow point (16) .

2. Kite system according to Claim 1, **characterized in that** the marking holder (25) has a visual marking.

3. Kite system according to Claim 1 or 2, **characterized in that** the kite system comprises a blocking mechanism (28, 29) which acts between the hauling rope (15) and the marking holder (25).

4. Kite system according to one of Claims 1 to 3, **characterized in that** the blocking mechanism (28, 29) is held in a state engaged with the hauling rope (15) by a spring force.

5. Kite system according to Claim 3 or 4, **characterized in that** the blocking mechanism (28, 29) of a first marking holder (25) is held in a state not engaged with the hauling rope (15) by engaging with a second marking holder (25).

6. Kite system according to Claim 5, **characterized in that** the blocking mechanism (28, 29) of the first marking holder in the non-engaged state interacts with a mandrel (30) of the second marking holder (25), wherein the mandrel (30) can in particular be disposed so as to be concentric with the hauling rope (15).

7. Kite system according to one of Claims 1 to 6, **characterized in that** the spacing of two neighbouring marking holders (25) in the entrained state is preferably larger than 20 m, furthermore preferably larger than 50 m, furthermore preferably larger than 80 m.

8. Kite system according to one of Claims 1 to 7, **characterized by** a monitoring installation for monitoring the length of the currently freely dispensed portion of the hauling rope (15).

9. Kite system according to Claim 8, **characterized in that** the fitting installation (31) upon receiving a control command from the monitoring installation initiates a changeover between an entrained state and a free-running state of a marking holder (25).

10. Kite system according to one of Claims 1 to 9, **characterized in that** the fitting installation (31) is conceived for displacing the marking holder (25) so as to initiate a changeover between a free-running state and an entrained state.

11. Kite system according to one of Claims 1 to 10, **characterized by** a magazine (26) which is conceived for receiving a plurality of marking holders (25) which are in the free-running state.

12. Kite system according to Claim 11, **characterized in that** the marking holders (25) when in operation can be released from the hauling rope (15), wherein the magazine (26) is specified such that the marking holders (25) can be stored at a location which is separate from the hauling rope (15).

13. Kite system according to one of Claims 1 to 12, **characterized in that** the kite system is specified such that the hauling rope speed in the changeover of a marking holder (25) between an entrained state and a free-running state is lower than a basic speed of the hauling rope (15).

14. Kite system according to one of Claims 1 to 12, **characterized in that** the marking holder (25) has an external terminal (37, 38) by way of which a battery of the marking holder (25) can be charged.

15. Method for operating a kite system, in which a hauling rope (15) extends between a kite (14) and a tow point (16), and in which a marking holder (25) is moved from a state which is free-running in relation to the hauling rope (15) to a state entrained with the hauling rope (15) once the hauling rope (15) in the free-running state of the marking holder (15) has been dispensed across a predefined distance, wherein the kite system comprises a plurality of marking holders (25), and wherein the predefined distance extends between the upper end of the hauling rope (15) and the tow point (16), or between a lowermost entrained marking holder (25) and the tow point (16).

## Revendications

1. Système formant cerf-volant comprenant un cerf-volant (14), un point d'écoute (16) et un fil de traction (15), le fil de traction (15) s'étendant entre le cerf-volant (14) et le point d'écoute (16), et un support de marqueur (25) qui est disposé entre le point d'écoute (16) et le cerf-volant (14), le support de marqueur (25) étant conçu pour passer entre un état accouplé au fil de traction (15) et un état désaccouplé du fil de traction (15), et un dispositif de montage (31) destiné à déclencher un passage entre l'état accouplé et l'état désaccouplé du support de marqueur (25), une pluralité de support de marqueur (25) étant disposés entre le cerf-volant (14) et le point d'écoute (16) .

2. Système formant cerf-volant selon la revendication 1, **caractérisé en ce que** le support de marqueur (25) comporte un marqueur visuel.

3. Système formant cerf-volant selon la revendication 1 ou 2, **caractérisé en ce que** le système formant cerf-volant comprend un mécanisme de verrouillage (28, 29) agissant entre le fil de traction (15) et le support de marqueur (25).

4. Système formant cerf-volant selon l'une des revendications 1 à 3, **caractérisé en ce que** le mécanisme de verrouillage (28, 29) est maintenu dans un état d'engagement avec le fil de traction (15) par une force élastique.

5. Système formant cerf-volant selon la revendication 3 ou 4, **caractérisé en ce que** le mécanisme de verrouillage (28, 29) d'un premier support de marqueur (25) est maintenu par engagement avec un deuxième support de marqueur (25) dans un état de non-engagement avec le fil de traction (15).

6. Système formant cerf-volant selon la revendication 5, **caractérisé en ce que** le mécanisme de verrouillage (28, 29) du premier support de marqueur coopère, à l'état de non-engagement, avec un mandrin (30) du deuxième support de marqueur (25), le mandrin (30) pouvant être disposé notamment concentriquement au fil de traction (15).

7. Système formant cerf-volant selon l'une des revendications 1 à 6, **caractérisé en ce que** la distance entre deux supports de marqueur adjacents (25) à l'état de raccordement est de préférence supérieure à 20 m, plus préférablement supérieure à 50 m, encore plus préférablement supérieure à 80 m.

8. Système formant cerf-volant selon l'une des revendications 1 à 7, **caractérisé par** un dispositif de surveillance destiné à surveiller la longueur de la portion actuellement librement filée du fil de traction (15) .

9. Système formant cerf-volant selon la revendication 8, **caractérisé en ce que** le dispositif de montage (31) déclenche un passage entre un état accouplé et un état désaccouplé d'un support de marqueur (25) après un ordre de commande reçu du dispositif de surveillance.

10. Système formant cerf-volant selon l'une des revendications 1 à 9, **caractérisé en ce que** le dispositif de montage (31) est destiné à déplacer le support de marqueur (25) afin de déclencher un passage entre un état désaccouplé et un état accouplé.

11. Système formant cerf-volant selon l'une des revendications 1 à 10, **caractérisé par** un magasin (26) qui est destiné à recevoir une pluralité de supports de marqueur (25) qui sont à l'état désaccouplé.

12. Système formant cerf-volant selon la revendication 11, **caractérisé en ce que** les supports de marqueur (25) peuvent être libérés du fil de traction (15) pendant le fonctionnement, le magasin (26) étant conçu de manière à ce que les supports de marqueur (25) soient montés à un emplacements séparé du fil de traction (15).

13. Système formant cerf-volant selon l'une des revendications 1 à 12, **caractérisé en ce que** le système formant cerf-volant est conçu de sorte que la vitesse du fil de traction lors du passage d'un support de marqueur (25) entre un état accouplé et un état désaccouplé soit inférieure à une vitesse de base de la ligne de traction (15).

14. Système formant cerf-volant selon l'une des revendications 1 à 12, **caractérisé en ce que** le support de marqueur (25) comporte un contact électrique extérieur (37, 38) par le biais duquel une batterie du support de marqueur (25) peut être chargée.

15. Procédé de fonctionnement d'un système formant cerf-volant, dans lequel un fil de traction (15) s'étend entre un cerf-volant (14) et un point d'écoute (16) et dans lequel un support de marqueur (25) passe d'un état désaccouplé du fil de traction (15) à un état accouplé au fil de traction (15) après que le fil de traction (15) a été filé sur une distance prédéterminée dans l'état désaccouplé du support de marqueur (15), le système formant cerf-volant comprenant une pluralité de supports de marqueur (25) et la distance prédéterminée s'étendant entre l'extrémité supérieure du fil de traction (15) et le point d'écoute (16) ou entre un support de marqueur accouplé le plus bas (25) et le point d'écoute (16).
